# EUROPÄISCHE PATENTSCHRIFT

(11) **EP 0 503 501 B1**
(45) Veröffentlichungstag und Bekanntmachung des Hinweises auf die Patenterteilung: **10.01.1996**
(21) Anmeldenummer: 92103880.8
(22) Anmeldetag: 06.03.1992
(51) Int. Cl.: G01B 7/14, B21B 38/10

(54) **Einrichtung zum Erfassen eines Walzenspaltes**
Apparatus for roller spacing determination
Appareil pour déterminer l'écartement entre deux rouleaux

(30) Priorität: 08.03.1991 DE 4107426
(43) Veröffentlichungstag der Anmeldung: 16.09.1992
(73) Patentinhaber: MASCHINEN- UND MÜHLENBAU WITTENBERG GmbH, D-06876 Lutherstadt Wittenberg (DE)
(72) Erfinder: Wahl, Günter, O-8201 Dresden (DE); Bischof, Günther, O-4600 Wittenberg (DE); Kretschmer, Wilfried, O-8036 Dresden (DE)
(74) Vertreter: Grünecker, Kinkeldey, Stockmair & Schwanhäusser Anwaltssozietät

(56) Entgegenhaltungen:
- DE-A- 1 945 638
- DE-A- 2 310 764
- DE-A- 3 218 795
- DE-B- 1 031 871
- US-A- 3 902 114

## Beschreibung

Die vorliegende Erfindung betrifft eine Einrichtung zum Erfassen eines Walzenspaltes für ein Walzenpaar, insbesondere für MüllereiMüllerei-Walzenstühle, mit zumindest einem Magnetfeldsensor für ein zwischen den Walzen des Walzenpaares ausgebildetes Magnetfeld. Vorzugsweise wird die vorliegende Erfassungseinrichtung für den Walzenspalt eines Walzenpaares für Walzenanordnungen vorgesehen, die in explosionsgefährdeten Einrichtungen, z.B. für das Vermahlen körnigen Gutes, verwendet werden.

Für Walzwerke, Walzenstühle etc. ist es für einen reibungslosen technologischen Ablauf häufig erforderlich, die Größe des Walzenspaltes zwischen den Walzen eines Walzenpaares zu erfassen und betriebsbedingte Veränderungen desselben anzuzeigen oder in Richtung auf eine Konstanthaltung des Walzenspaltes nachzuregeln. Hierbei kommen neben mechanischen, optischen, kapazitiven und anderen Mitteln auch elektromagnetische Einrichtungen zum Einsatz. Diese haben den Vorteil, daß das durch entsprechende Meßwertgeber, wie z.B. Hall-Sonden oder andere Magnetfeld-Sonden, die die Veränderung eines im Walzenspalt zwischen den Walzen erzeugten Magnetfeldes erfassen, und z.B. den Stirnseiten der Walzen zugeordnet sind, gelieferte Signal verhältnismäßig einfach meß- und regelungstechnisch verarbeitet werden kann.

Aus der DE-AS 16 23 127 (= US-A-3902 114) ist eine Einrichtung zum Messen des Walzenspaltes eines Walzenpaares mit Mitteln zum Erzeugen eines Magnetfeldes im Walzenspalt und einem mit Magnetfeldsensoren ausgestatteten Meßkopf bekannt, wobei eine Doppelgabel reibungsarm zwischen den Walzen des Walzenpaares angeordnet ist. Die Doppelgabel ist federnd ausgeführt, so daß diese der Lageänderung der Walzen und damit der Änderung des Walzenspaltes folgen kann. Im Quersteg zwischen den beiden Gabelhälften befindet sich ein sondenträqer-mit zwei Meßsonden, die symmetrisch zu der durch die Walzenmittelpunkte verlaufenden Meßachse angeordnet sind. Der Sondenträger besteht aus einem magnetisch nichtleitenden Material. Im Bereich der Sonden sind auf dem Sondenträger Polschuhe angebracht, die in Richtung der Durchflutung weisen. Die elektromagnetische Induktion kann aber auch durch zwei symmetrisch zur Meßachse angeordnete, stromdurchflossene Spulen erzeugt werden. Um eine ausreichende Meßgenauigkeit zu erreichen, muß der Luftspalt zwischen Walzenoberfläche und Polschuh bzw. zwischen der Walzenoberfläche und den Polen der stromdurchflossenen Spule so gering wie möglich gehalten werden. Bei Anlegen einer Wechselspannung entsteht über Sondenträger bzw. Spule, Luftspalt und Walze ein magnetischer Fluß, der durch die Meßsonden aufgenommen wird. Eine Veränderung der Lage der Walzen bewirkt eine Magnetfeldänderung, die erfaßt wird und für eine elektronische Auswertung zur Verfügung steht. Eine solche Lösung ist allerdings verhältnismäßig aufwendig und läßt sich dynamisch im Fertigungsprozeß kaum beherrschen. Die Ursache hierfür liegt vor allem darin, daß eine hohe magnetische Induktion erzeugt werden muß, da aufgrund der großen Walzenmasse die Magnetisierungsenergie groß sein muß und überdies der Werkstoff der Walzen, zumeist Hartguß, ungünstige Magnetisierungseigenschaften aufweist. Überdies ist der Einsatz einer solchen Einrichtung für explosionsgefährdete Anlagen, wie z.B. in Müllereibetrieben, wegen der hohen Induktion und der Gefahr elektrischer Entladungen, nicht verwendbar.

Der Erfindung liegt daher die Aufgabe zugrunde, eine Einrichtung der eingangs genannten Art anzugeben, die auf unkomplizierte Weise die Erfassung des Walzenspaltes auch in explosionsgeneigter Atmosphäre unter Einsatz von Magnetfeldsensoren ermöglicht, keine Probleme hinsichtlich ihres dynamischen Verhaltens unter Betriebsbedingungen des Walzenpaares aufwirft und auch eine einfache Nachrüstung bereits vorhandener Walzwerke oder Walzenstühle ermöglicht.

Diese Aufgabe wird bei einer Einrichtung der eingangs genannten Art erfindungsgemäß dadurch gelöst, daß das Walzenpaar eine Permanentmagnetanordnung mit zumindest einem in eine Walze an ihre Stirnseite am Walzenumfang eingesetzten Permanentmagneten aufweist und die andere Walze mit einem magnetisch leitfähigen Material versehen ist, zur Erzeugung des Magnetfeldes zwischen den Walzen des Walzenpaares und der Magnetfeldsensor in einer Verlängerung des Walzenspaltes angeordnet ist.

Auf diese Weise kann zwischen den Walzen des Walzenpaares im Walzenspalt ein Magnetfeld erzeugt werden, das durch entsprechende Magnetfeldsensoren, die von außerhalb das Magnetfeld im Walzenspalt bzw. dessen Veränderungen erfassen, überwacht wird. Auf diese Weise ist zudem eine Erzeugung des Magnetfeldes durch Elektromagnete und elektromagnetische Induktion vermieden, so daß der Strombedarf der Gesamteinrichtung, der das Walzenpaar zugeordnet ist, vermindert wird und auch ein Einsatz in explosionsgeschützten Anlagen möglich ist. Überdies ist der konstruktive Aufwand gering, kann die erforderliche magnetische Feldstärke und Durchflutung durch Verwendung entsprechender Permanentmagneteinsätze bzw. diesen zugeordneter Einsätze aus ferromagnetischem Material gering gehalten werden und es können bereits vorhandene Walzenpaare in einfacher Weise mit einer solchen Erfassungseinrichtung nachgerüstet werden. Vorzugsweise ist zumindest eine der Walzen mit einem Permanentmagneten und die andere Walze mit einem magnetisch leitfähigen Material, wie z.B. einem weiteren Permanentmagneten oder einem ferromagnetischen Material versehen, der bzw. das in eine dem Permanentmagneten zugewandte, radial gegenüberliegende Position zur Ausbildung eines den Walzenspalt enthaltenden Magnetkreises bringbar ist.

Eine besonders bevorzugte Ausführungsform der vorliegenden Erfindung besteht darin, daß beide Walzen des Walzenpaares einen Permanentmagneten stirnseitig am Walzenumfang aufweisen, derart, daß die Permanentmagneten beider Walzen in im wesentlichen gleicher Axialposition relativ zur Rotationsachse der jeweiligen Walze angeordnet und in Abhängigkeit von der Drehlage beider Walzen in eine einander radial gegenüberliegende Position bringbar sind.

Gemäß einer besonders bevorzugten Ausführungsform der vorliegenden Erfindung ist jede der Walzen des Walzenpaares im Bereich ihrer beiden Stirnseiten und zugleich ihrer Umfangsfläche mit einem ersten und einem zweiten Permanentmagneten versehen, wobei jede Walze diese stirn-und umfangsseitig vorgesehenen Permanentmagneten in einer Ebene aufweist, die auch die Drehachse der Walze enthält. Hierbei sind die Permanentmagneten einer Walze derart angeordnet, daß die Nord-Südpol-Orientierung parallel zur Rotationsachse der Walze erfolgt und die beiden Permanentmagneten der Walze mit ihren gleichnamigen Polen einander zugewandt montiert sind. Dabei erfolgt die Anordnung der insgesamt vier Permanentmagnete des Walzenpaares derart, daß die Permanentmagneten der einen Walze mit ihren Südpolen einander zugewandt angeordnet sind, während die Permanentmagneten der anderen Walze mit ihren Nordpolen einander zugewandt montiert sind. Somit liegen bei einer bestimmten Drehlage der Walzen des Walzenpaares zueinander die Permanentmagneten der beiden Walzen im Bereich des Walzenspaltes und am stirnseitigen Ende beider Walzen einander so gegenüber, daß jeweils ein den Walzenspalt überbrückender Magnetkreis gebildet ist, wobei stirnseitig in der Verlängerung des Walzenspaltes vorzugsweise Hall-Generatoren als Magnetfeldsonden angeordnet sind, die der Erfassung des Magnetfeldes im Walzenspalt bzw. der Erfassung der Veränderung desselben dienen, so daß über die Erfassung der magnetischen Feldstärke bzw. der Veränderung derselben in einer punktförmigen Messung auf die Größe des Walzenspaltes zwischen den Walzen des Walzenpaares bzw. die Veränderung des Walzenspaltes geschlossen werden kann und hieraus entsprechende Steuersignale, z.B. für eine Konstanthaltungsregelung des Walzenspaltes durch Einstellung der Walzenabstände gewonnen werden können.

Infolge der praktisch punktförmigen Erfassung des Walzenspaltes läßt sich die tendenzielle Dynamik der Walzenspaltveränderung in besonders vorteilhafter Weise überwachen, da das Meßergebnis von Schwankungen im wesentlichen frei ist, die aus Gleichlaufabweichungen der Walzenrotation resultieren.

Weitere, bevorzugte Ausgestaltungen des Erfindungsgegenstandes sind in den übrigen abhängigen Ansprüchen dargelegt.

Die Erfindung wird nachstehend anhand eines Ausführungsbeispieles und zugehöriger Zeichnungen näher erläutert. In diesen zeigen:
- Fig. 1: eine schematische Darstellung eines Walzenpaares mit der erfindungsgemäßen Einrichtung zur Erfassung des Walzenspaltes nach einem Ausführungsbeispiel der Erfindung,
- Fig. 2: eine schematische Darstellung des Aufbaus eines Meßkopfes, der in der Einrichtung nach Fig. 1 verwendet wird,
- Fig. 3: eine schematische Stirnansicht des Walzenpaares nach Fig. 1 in einer ersten Relativdrehlage der Walzen des Walzenpaares zueinander, und
- Fig. 4: eine Stirnansicht ähnlich derjenigen in Fig. 3 für eine relative Drehlage der Walzen des Walzenpaares zueinander, in der eine Erfassung bzw. Messung des Walzenspaltes erfolgt.

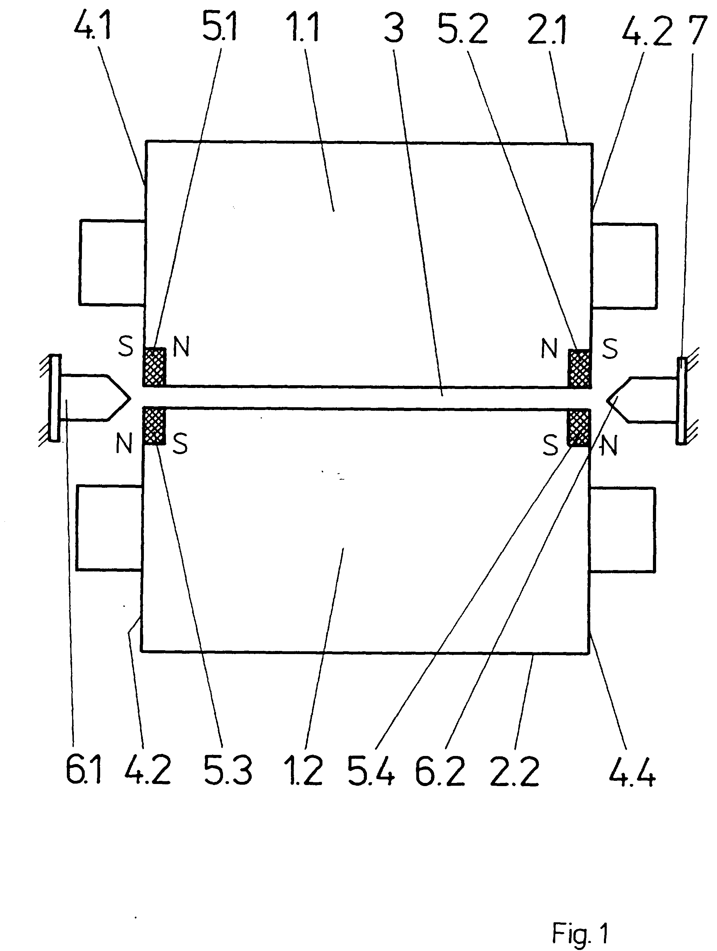

In den Fig. 1 bis 4 ist ein Ausführungsbeispiel der Einrichtung zur Erfassung eines Walzenspaltes für ein Walzenpaar, z.B. für einen Müllerei-Walzenstuhl, gezeigt. Das jeweils schematisch dargestellte Walzenpaar besteht aus zwei zugehörigen, einander gegenüberliegenden Walzen 1.1, 1.2. Die Walze 1.1 besitzt eine Mantelfläche 2.1, die gemeinsam mit einer Mantelfläche 2.2 der anderen Walze 1.2 einen Walzenspalt 3 begrenzt.

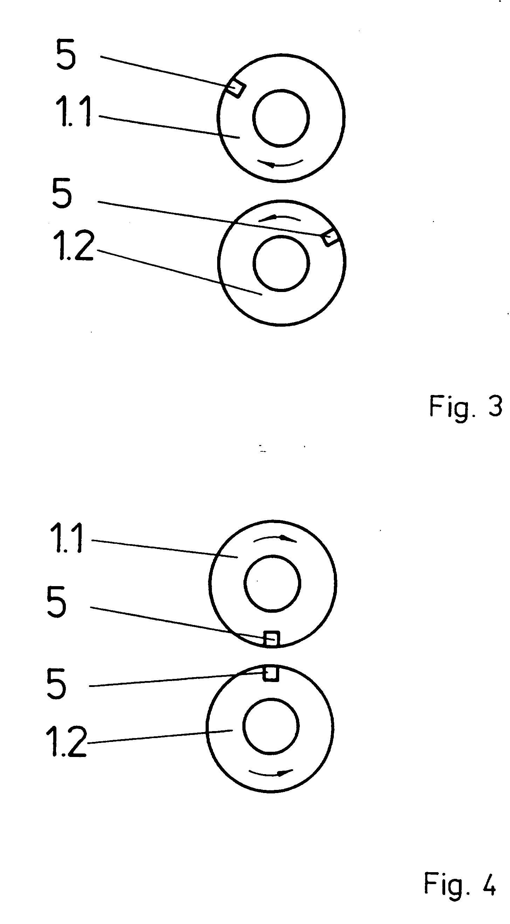

Jede der Walzen 1.1 ist mit einem ersten und einem zweiten Permanentmagneten 5.1 (Walze 1.1) bzw. 5.3 (Walze 1.2) sowie 5.2 (Walze 1.1) und 5.4 (Walze 1.2) versehen, derart, daß die Permanentmagneten 5.1 bis 5.4 einerseits bündig mit den beiderseitigen Stirnflächen 4.1, 4.2 (Walze 1.1) bzw. 4.3, 4.4 (Walze 1.2) und andererseits bündig mit den Mantelflächen 2.1, 2.2 beider Walzen 1.1, 1.2 sind, wie dies auch aus den schematischen Stirnansichten nach Fig. 3 und 4 deutlich ist. In diesem Ausführungsbeispiel ist in Verbindung mit jeder Walzenstirnfläche 4.1 bis 4.4 jeweils ein Permanentmagnet 5.1 bis 5.4 verwendet. Diese Anordnung könnte jedoch auch derart modifiziert werden, daß entweder eine der Walzen 1.1, 1.2 oder beide Walzen in Umfangsrichtung verteilt jeweils eine Mehrzahl von Permanentmagneten in stirn- und zugleich umfangsseitiger Anordnung aufweisen.

Die Permanentmagnete 5.1 bis 5.4 befinden sich an der Peripherie der Stirnflächen 4.1 bis 4.4, d.h. in einem maximalen Abstand zur Drehachse der Walzen 1.1, 1.2, so daß sich in der in Fig. 4 gezeigten Drehlage der Walzen 1.1, 1.2 zueinander örtlich begrenzte Magnetkreise zwischen den Walzen 1.1, 1.2 unter Einschluß des Walzenspaltes 3 ausbilden, deren Magnetisierungsbedarf verhältnismäßig gering gehalten werden kann, zugleich jedoch eine sichere Signalgewinnung durch beiderseits in der Verlängerung des Walzenspaltes 3 angeordneten Meßköpfe 6.1, 6.2 (vorzugsweise mit Hall-Sonden als Magnetfeldsensoren) eines hier nicht näher gezeigten Steuer- oder Regelkreises ermöglichen. Die Permanentmagnete 5.1 bis 5.4 haben dabei eine Masse, die klein ist gegenüber der Masse der zugehörigen Walzen 1.1, 1.2.

Wie aus den Fig. 1, 3 und 4 ersichtlich ist, sind die Permanentmagnete 5.1, 5.2 der Walze 1.1 bzw. die Permanentmagnete 5.3, 5.4 der Walze 1.2 so angeordnet, daß sie sich in einer Ebene befinden, die auch die Drehachse der jeweiligen Walze 1.1 bzw. 1.2 enthält. Die Permanentmagnete 5.1 bis 5.4 sind vorzugsweise in Nuten der Walzen 1.1, 1.2 fixiert, vorzugsweise eingeklebt. Als Geberelemente können handelsübliche Permanentmagnete verwendet werden, die aus einer keramischen Preßmasse bestehen, so daß die Masse der Permanentmagnete 5.1 bis 5.4 gegenüber der Masse der Walzen 1.1, 1.2 praktisch vernachlässigbar ist.

In dem vorliegenden Ausführungsbeispiel ist die Anordnung der Permanentmagnete 5.1 sowie 5.2 bezüglich der Walze 1.1 und der Permanentmagnete 5.3, 5.4 bezüglich der Walze 1.2 so getroffen, daß die Permanentmagnete jeder Walze mit gleichnamigen Polen in Achsrichtung der jeweiligen Walze einander gegenüberliegen, d.h. die Nordpol-/Südpol-Orientierung der Permanentmagnete 5.1 bis 5.4 erfolgt in Achsrichtung der Walzen 1.1, 1.2 derart, daß die Permanentmagneten 5.1, 5.2 der Walze 1.1 mit gleichnamigen Polen, in diesem Fall den Nordpolen N, einander zugewandt angeordnet sind, wie dies Fig. 1 zeigt, während die Permanentmagneten 5.3, 5.4 der anderen Walze 1.2 in entgegengesetzter Polung angeordnet sind, so daß sich die Südpole S in Achsrichtung der Walze 1.2 zugewandt gegenüberliegen. Damit liegen sich einerseits für jede Walze gleichnamige Pole der Permanentmagnete gegenüber, für die Gesamtanordnung des Walzenpaares sind die Permanentmagnete 5.1, 5.3 bzw. 5.2, 5.4 andererseits so angeordnet, daß sich ungleichnamige Pole der zugehörigen Permanentmagnetpaare 5.1, 5.3 bzw. 5.2, 5.4 radial gegenüberliegen, so daß sich in der in Fig. 1 dargestellten Position der Walzen 1.1, 1.2 im Bereich der Permanentmagnetpaare 5.1, 5.3; 5.2, 5.4 jeweils ein entsprechender Magnetkreis unter lokaler Durchflutung des Walzenspaltes 3 ausbildet.

Jeweils in der axialen Verlängerung des Walzenspaltes sind stirnseitig die Meßköpfe 6.1, 6.2, die in einem Gehäuse 7 befestigt und vorzugsweise von gleicher Bauart sind, zur Erfassung des jeweiligen Magnetfeldes im Walzenspalt 3 im Bereich der Stirnseiten 4.1 bis 4.4 angeordnet. Aus den Meßsignalen der Meßköpfe 6.1, 6.2 können in einem Regelkreis Steuersignale für eine hier nicht gezeigte Einstelleinrichtung für den Abstand der Walzen 1.1, 1.2 abgeleitet werden. Die Meßköpfe 6.1, 6.2 sind so angeordnet, daß sie sich in Höhe des Walzenspaltes 3 in Verlängerung derselben befinden. Sie befinden sich damit vorzugsweise sensorisch exakt auf der Verlängerung einer Linie, die sich bei Berührung der Walzen 1.1, 1.2 nach symmetrisch gegensinniger Verstellung ergeben würde.

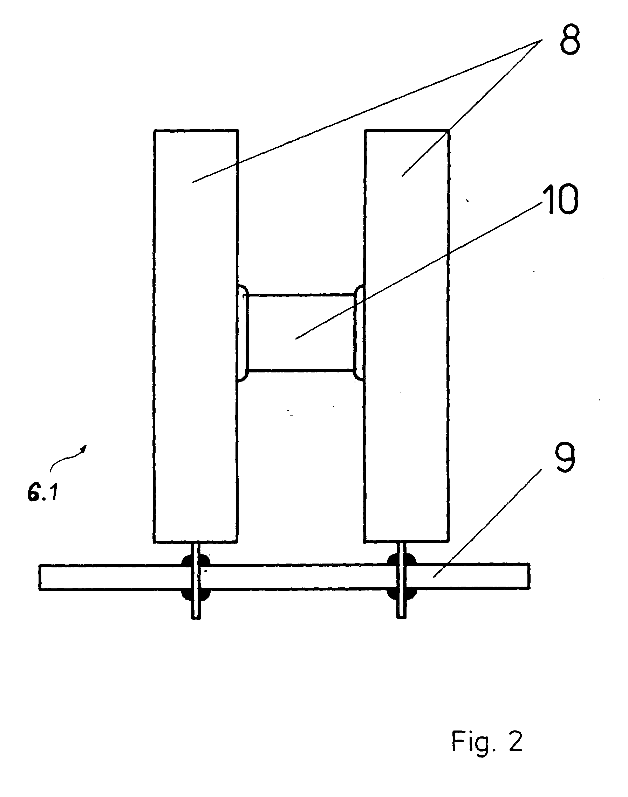

In Fig. 2 ist schematisch der Aufbau des Meßkopfes 6.1 dargestellt, der Meßkopf 6.2 besitzt vorzugsweise eine entsprechende Gestaltung. Der Meßkopf 6.1 weist als Magnetfeldsensoren zwei Hall-Sonden 8 auf, die auf einer Platine 9 jeweils vertikal aufgelötet sind. Die Verwendung zweier Hall-Sonden 8 dient der Verdoppelung der Empfindlichkeit der Meßanordnung. Außerdem kann auf diese Weise zugleich eine weitere Temperaturkompensation erreicht werden. Zwischen den Hall-Sonden 8, die in einer Modifikation des Meßkopfes auch durch andere Magnetfeldsensoren ersetzt sein können, ist zur Bündelung des Magnetfeldes und damit zur Erhöhung der Empfindlichkeit der Anordnung ein Ferritelement 10 angeordnet.

Zur Erläuterung der Wirkungsweise der Erfassungseinrichtung wird nochmals auf die Fig. 1, 3 und 4 verwiesen, die jeweils schematisch eine Stirnflächenansicht des Walzenpaares 1.1, 1.2 zeigen. Die Walzen 1.1, 1.2 drehen sich in Pfeilrichtung. Somit vollziehen auch die Permanentmagnete 5 der Walzen 1.1, 1.2 eine Kreisbewegung um die Drehachse der Walzen 1.1, 1.2. Aus technologischen Gründen werden vielfach unterschiedliche Drehzahlen für die Walzen 1.1, 1.2 gewählt, um eine Relativbewegung der Mantelflächen 2.1, 2.2 zueinander zu erreichen und hierdurch einen Mahl- oder Reibeffekt, z.B. für die Vermahlung oder Verschrotung von Getreide, zu erzielen. Unter Berücksichtigung der vorzugsweise unterschiedlichen Drehzahlen der Walzen 1.1, 1.2 stellt sich nach einer von der Drehzahldifferenz abhängigen Zeit die in den Fig. 1 und 4 dargestellte relative Drehlage der Walzen 1.1, 1.2 zueinander ein, in der die Permanentmagnete 5 beider Walzen 1.1, 1.2 einander zugewandt gegenüberliegen und die Arbeitsposition für die Meß- bzw. Erfassungseinrichtung zur Erfassung des Walzenspaltes 3 erreicht ist.

Wie bereits anhand von Fig. 1 erläutert wurde, liegen sich aufgrund der Anordnung der Permanentmagnete 5.1 bis 5.4 somit deren ungleichnamige Pole jeweils bezüglich der Permanentmagnetpaare 5.1, 5.3 bzw. 5.2, 5.4 gegenüber und es bildet sich kurzzeitig ein Magnetfeld aus, dessen Feldlinienverlauf und Feldstärke durch vektorielle Addition der Magnetfelder der beiden Permanentmagneten jedes Permanentmagnetpaares 5.1, 5.3; 5.2, 5.4 gegeben ist und in erster Näherung vom Abstand der Walzen 1, d.h. von der Größe des Walzenspaltes 3, abhängig ist. Die Hall-Sonden 8 der Meßköpfe 6.1, 6.2 geben daraufhin ein die magnetische Feldstärke und damit indirekt die Größe des Walzenspaltes repräsentierendes Signal an eine hier nicht gezeigte Auswerteeinheit ab, die dieses Signal verarbeitet und als z.B. digitale Information über die Größe des Walzenspaltes 3 ausgibt oder ihrerseits Stelleinrichtungen für die Abstandseinstellung der Walzen 1.1, 1.2, z.B. in Richtung auf eine Konstanthaltung des Walzenspaltes, beeinflußt.

Im Rahmen der vorliegenden Erfindung sind eine Vielzahl von Modifikationen und Abwandlungen des gezeigten Ausführungsbeispieles möglich, ohne daß die Grundlagen der Erfindung verlassen werden. So kann z.B. ein Permanentmagnetpaar mit zugehörigem Meßkopf nur an einer Stirnseite des Walzenpaares vorgesehen sein, obwohl das hier gezeigte Ausführungsbeispiel besonders vorteilhaft ist, um tatsächlich über die gesamte Länge der Walzen die Größe des Walzenspaltes zu erfassen.

Es ist darüber hinaus auch möglich, jeweils einen oder mehrere Permanentmagneten nur an einer der Walzen des Walzenpaares vorzusehen und anstelle des in der Meß- bzw. Erfassungsposition radial gegenüberliegenden Permanentmagneten der anderen Walze an dieser Stelle ein magnetisch gut leitendes Material, wie z.B. ein Ferromagnetikum (z.B. Ferrit) anzuordnen, so daß auf diese Weise ebenfalls ein lokales, die Größe des Walzenspaltes repräsentierendes Magnetfeld, das durch einen entsprechenden, in der Verlängerung des Walzenspaltes angeordneten Magnetfeldsensor erfaßt wird, ausgebildet wird. In Abhängigkeit von der gewählten Sensor- und Auswertetechnik der Erfassungseinrichtung können auch andere Konfigurationen in bezug auf die Positionierung und Polung der Permanentmagneten gewählt werden.

## Patentansprüche

1. Einrichtung zum Erfassen eines Walzenspaltes eines Walzenpaares (1.1; 1.2), insbesondere für Müllerei-Walzenstühle, mit Mitteln zum Ausbilden eines Magnetfeldes sowie zumindest einem Magnetfeldsensor (6.1, 6.2) für die Erfassung des Magnetfeldes und zur Ermittlung eines den Walzenspalt repräsentierenden Meßwertes, **dadurch gekennzeichnet**, daß das Walzenpaar (1.1; 1.2) eine Permanentmagnetanordnung (5.1 bis 5.4) mit zumindest einem in eine Walze an ihre Stirnseite am Walzenumfang eingesetzten Permanentmagneten (5.1 bis 5.4) aufweist und die andere Walze mit einem magnetisch leitfähigen Material versehen ist, zur Erzeugung des Magnetfeldes zwischen den Walzen (1.1; 1.2) des Walzenpaares und der Magnetfeldsensor (6.1, 6.2) in einer Verlängerung des Walzenspaltes angeordnet ist.

2. Einrichtung nach Anspruch 1, **dadurch gekennzeichnet**, daß beide Walzen (1.1; 1.2) des Walzenpaares einen Permanentmagneten (5.1 bis 5.4) an ihrer Stirnseite am Walzenumfang aufweisen, derart, daß die Permanentmagneten (5.1 bis 5.4) beider Walzen (1.1; 1.2) in im wesentlichen gleicher Axialposition relativ zur Rotationsachse der jeweiligen Walze (1.1; 1.2) angeordnet sind.

3. Einrichtung nach Anspruch 1 oder 2, **dadurch gekennzeichnet**, daß zumindest eine Walze an ihren beiden Stirnseiten (4.1 bis 4.4) am Walzenumfang axial einander gegenüberliegend einen ersten und einen zweiten Permanentmagneten (5.1, 5.2; 5.3, 5.4) aufweist und beide Permanentmagneten (5.1, 5.2; 5.3, 5.4) in einer, die Rotationsachse der Walze (1.1; 1.2) enthaltenden Ebene angeordnet sind.

4. Einrichtung nach Anspruch 3, **dadurch gekennzeichnet**, daß die Permanentmagneten (5.1 bis 5.4) mit in axialer Richtung der Walze (1.1; 1.2) abfolgender Magnetpolausbildung montiert sind, derart, daß gleichnamige Pole (N, S) der Permanentmagneten (5.1, 5.2; 5.3, 5.4) einer Walze (1.1, 1.2) in Achsrichtung der Walze (1.1, 1.2) einander zugewandt angeordnet sind.

5. Einrichtung nach zumindest einem der vorhergehenden Ansprüche 1 bis 4, **dadurch gekennzeichnet**, daß beide Walzen (1.1, 1.2) des Walzenpaares bündig mit den Stirn- und Umfangsflächen (4.1 bis 4.4 bzw. 2.1; 2.2) Permanentmagnete (5.1 bis 5.4) aufweisen, wobei die unter magnetischer Durchflutung des zugehörigen Bereiches des Walzenspaltes (3) einander in radialer Richtung gegenüberliegenden Permanentmagnete (5.1, 5.3 bzw. 5.2, 5.4) der Walzen (1.1; 1.2) des Walzenpaares eine gegensätzliche magnetische Polung aufweisen.

6. Einrichtung nach zumindest einem der vorhergehenden Ansprüche 1 bis 5, **dadurch gekennzeichnet**, daß jede Walze (1.1; 1.2), jeweils in einer die Rotationsachse enthaltenden Ebene, stirnseitig und umfangsseitig bündig je einen ersten und einen zweiten Permanentmagneten (5.1, 5.2; 5.3, 5.4) aufweist, die jeweils zusammenwirkenden Permanentmagnete (5.1, 5.3; 5.2, 5.4) beider Walzen (1.1, 1.2) jeweils mit entgegengesetzter magnetischer Polung angeordnet sind und in einer Verlängerung des Walzenspaltes (3) stirnseitig an jeder Seite des Walzenpaares Magnetfeldsensoren (6.1, 6.2), vorzugsweise Hall-Sonden, angeordnet sind.

7. Einrichtung nach zumindest einem der vorhergehenden Ansprüche 1 bis 6, **dadurch gekennzeichnet**, daß die Permanentmagneten (5.1 bis 5.4) in Radialnuten der Walzen (1.1; 1.2) eingeklebt sind.

8. Einrichtung nach zumindest einem der vorhergehenden Ansprüche 1 bis 7, **dadurch gekennzeichnet**, daß die Walzen (1.1; 1.2) mit unterschiedlichen Umfangsgeschwindigkeiten rotierend antreibbar sind und die Anordnung der Permanentmagneten (5.1, 5.2; 5.3, 5.4) jeder Walze (1.1, 1.2) in einer Ebene vorgesehen ist, die die Rotationsachse der zugehörigen Walze (1.1; 1.2) enthält.

9. Einrichtung nach zumindest einem der vorhergehenden Ansprüche 1 bis 8, **dadurch gekennzeichnet**, daß zumindest eine Walze des Walzenpaares, in Umfangsrichtung verteilt, eine Mehrzahl von Permagnentmagneten aufweist.

## Claims

1. Apparatus for measuring the roller gap of a pair of rollers (1.1; 1.2), particularly for roller carriage arms in grinding mills, with means for generating a magnetic field and at least one magnetic field sensor (6.1, 6.2) for detecting the magnetic field and for obtaining a measurement which represents the roller gap, characterised in that the pair of rollers (1.1; 1.2) has a permanent magnet arrangement (5.1 to 5.4) with at least one permanent magnet (5.1 to 5.4) inserted in a roller at the end face thereof at the roller circumference and the other roller is provided with a magnetically conductive material to generate the magnetic field between the rollers (1.1; 1.2) of the pair of rollers and the magnetic field sensor (6.1, 6.2) is arranged in an extension of the roller gap.

2. Apparatus according to claim 1, characterised in that both rollers (1.1; 1.2) of the pair of rollers have a permanent magnet (5.1 to 5.4) at their end face at the circumference of the roller, so that the permanent magnets (5.1 to 5.4) of both rollers (1.1; 1.2) are arranged in substantially the same axial position relative to the rotation axis of the associated roller (1.1 ; 1.2).

3. Apparatus according to claim 1 or 2, characterised in that at least one roller has, at its two end faces (4.1 to 4.4), at the roller circumference, a first and a second permanent magnet (5.1, 5.2; 5,3, 5.4), axially opposite each other, and both permanent magnets (5.1, 5.2; 5.3, 5.4) are arranged in a plane which contains the axis of rotation of the roller (1.1; 1.2).

4. Apparatus according to claim 3, characterised in that the permanent magnets (5.1 to 5.4) are mounted with the magnet poles arranged in succession in the axial direction of the roller (1.1; 1.2) so that like poles (N, S) of the permanent magnets (5.1, 5.2; 5.3, 5.4) of a roller (1.1, 1.2) are arranged facing one another in the axial direction of the roller (1.1, 1.2).

5. Apparatus according to at least one of the preceding claims 1 to 4, characterised in that both rollers (1.1, 1.2) of the pair of rollers have permanent magnets (5.1 to 5.4) fitting flush with their end faces and circumferential surfaces (4.1 to 4.4 and 2.1; 2.2), the permanent magnets (5.1, 5.3 and 5.2, 5.4, respectively) of the rollers (1.1; 1.2) of the pair of rollers which lie radially opposite one another, under magnetic potential circulating in the associated area of the roller gap (3) having opposite magnetic polarity.

6. Apparatus according to at least one of the preceding claims 1 to 5, characterised in that each roller (1.1; 1.2), in each case in a plane which contains the xis of rotation, has a first and a second permanent magnet (5.1, 5.2; 5.3, 5.4) fitting flush with the end face and the circumferential surface, the cooperating permanent magnets (5.1, 5.3; 5.2, 5.4) of both rollers (1.1, 1.2) each being arranged with opposing magnetic polarity. and magnetic field sensors (6.1, 6.2), preferably Hall probes, are arranged in an extension of the roller gap (3) at the end face on each side of the pair of rollers.

7. Apparatus according to at least one of the preceding claims 1 to 6, characterised in that the permanent magnets (5.1 to 5.4) are adhesively bonded in radial grooves in the rollers (1.1; 1.2).

8. Apparatus according to at least one of the preceding claims 1 to 7, characterised in that the rollers (1.1; 1.2) are rotatably drivable at different circumferential speeds and the permanent magnets (5.1, 5.2; 5.3, 5.4) of each roller (1.1, 1.2) are arranged in a plane which contains the axis of rotation of the associated roller (1.1; 1.2).

9. Apparatus according to at least one of the preceding claims 1 to 8, characterised in that at least one roller of the pair of rollers has a plurality of permanent magnets, distributed in the circumferential direction.

## Revendications

1. Dispositif pour déterminer l'intervalle entre les cylindres d'une paire de cylindres (1.1; 1.2), en particulier pour les cages de cylindres de meunerie, comprenant des organes pour établir un champ magnétique, ainsi qu'au moins un détecteur de champ magnétique (6.1, 6.2) pour déterminer le champ magnétique et pour détecter une valeur de mesure représentant l'intervalle entre les cylindres, caractérisé en ce que la paire de cylindres (1.1; 1.2) présente un agencement d'aimants permanents (5.1 à 5.4) comportant au moins un aimant permanent mis en place dans un cylindre sur sa face frontale à la pénphérie du cylindre, et l'autre cylindre est pourvu d'un matériau à perméabilité magnétique pour établir un champ magnétique entre les cylindres (1.1; 1.2) de la paire de cylindres, et en ce que le détecteur de champ magnétique (6.1, 6.2) est agencé dans un prolongement de l'intervalle entre les cylindres.

2. Dispositif selon la revendication 1, caractérisé en ce que les deux cylindres (l.l; 1.2) de la paire de cylindres présentent un aimant permanent (5.1 à 5.4) sur leur face frontale à la pénphérie du cylindre, de telle sorte que les aimants permanents (5.1 à 5.4) des deux cylindres (1.1 1.2) sont agencés dans une position axiale sensiblement égale par rapport à l'axe de rotation du cylindre respectif(l.l ; 1.2).

3. Dispositif selon l'une ou l'autre des revendications 1 et 2, caractérisé en ce qu'au moins un cylindre présente sur ses deux faces frontales (4.1 à 4.4) à la périphérie du cylindre un premier et un second aimant permanent (5.1, 5.2 ; 5.3, 5.4) axialement à l'opposé l'un de l'autre, et en ce que les deux aimants permanents (5.1, 5.2 ; 5.3, 5.4) sont agencés dans un plan contenant l'axe de rotation du cylindre (1.1 ; 1.2).

4. Dispositif selon la revendication 3, caractérisé en ce que les aimants permanents (5.1 à 5.4) sont montés avec une disposition de pôles magnétiques qui se suivent en direction axiale du cylindre (1.1 ; 1.2), de telle sorte que des pôles de même polarité (N, S) des aimants permanents (5.1, 5.2 ; 5.3, 5.4) d'un cylindre (1.1, 1.2) sont agencés de façon dirigée l'un vers l'autre en direction axiale du cylindre (1.1, 1.2).

5. Dispositif selon l'une quelconque au moins des revendications précédentes 1 à 4, caractérisé en ce que les deux cylindres (1.1, 1.2) de la paire de cylindres présentent des aimants permanents (5.1 à 5.4) en affleurement avec les surfaces frontales et périphériques (4.1 à 4.4 ou 2.1; 2.2), les aimants permanents (5.1, 5.3 ou 5.2, 5.4) des cylindres (1.1; 1.2) de la paire de cylindres, qui sont situés à l'opposé l'un de l'autre en direction radiale sous la traversée du flux magnétique de la région associée de l'intervalle (3) entre les cylindres, présentant une polarité magnétique contraire.

6. Dispositif selon l'une quelconque au moins des revendications précédentes 1 à 5, caractérisé en ce que chaque cylindre (1.1 ; 1.2) présente respectivement, dans un plan contenant l'axe de rotation, en affleurement du côté frontal et périphérique, un premier et un second aimant permanent respectifs (5.1, 5.2 ; 5.3, 5.4), en ce que les aimants permanents (5.1. 5.3 ; 5.2, 5.4) respectivement en coopération des deux cylindres (1.1, 1.2) sont agencés avec une polarité magnétique opposée, et en ce que des détecteurs de champ magnétique (6.1, 6.2), de préférence des sondes de Hall, sont agencés dans un prolongement de l'intervalle (3) entre les cylindres du côté frontal sur chaque côté de la paire de cylindres.

7. Dispositif selon l'une quelconque au moins des revendications précédentes 1 à 6, caractérisé en ce que les aimants permanents (5.1 à 5.4) sont collés dans des gorges radiales des cylindres (1.1; 1.2).

8. Dispositif selon l'une quelconque au moins des revendications précédentes 1 à 7, caractérisé en ce que les cylindres (1.1 ; 1.2) peuvent être entraînés en rotation avec des vitesses périphériques différentes, et en ce que l'agencement des aimants permanents (5.1, 5.2 ; 5.3, 5.4) de chaque cylindre (1.1, 1.2) est prévu dans un plan qui contient l'axe de rotation du cylindre associé (1.1 ; 1.2).

9. Dispositif selon l'une quelconque au moins des revendications précédentes 1 à 8, caractérisé en ce que l'un au moins des cylindres de la paire de cylindres présente une pluralité d'aimants permanents répartis en direction périphérique.
